# EUROPEAN PATENT SPECIFICATION

(11) **EP 3 647 287 B1**
(45) Date of publication and mention of the grant of the patent: **17.04.2024**
(21) Application number: 18203496.7
(22) Date of filing: 30.10.2018
(51) Int. Cl.: C03C 17/00, A61J 1/00, C09D 4/00, B65D 1/00

(54) **CONTAINER PRECURSOR HAVING A WALL OF GLASS WHICH IS SUPERIMPOSED BY A PLURALITY OF PARTICLES**
BEHÄLTERVORLÄUFER MIT EINER VON EINER VIELZAHL VON PARTIKELN ÜBERLAGERTEN GLASWAND
PRÉCURSEUR DE CONTENEUR AYANT UNE PAROI DE VERRE SUPERPOSÉE PAR UNE PLURALITÉ DE PARTICULES

(43) Date of publication of application: 06.05.2020
(73) Proprietor: SCHOTT Pharma AG & Co. KGaA, 55122 Mainz (DE); SCHOTT AG, 55122 Mainz (DE)
(72) Inventor: Mangold, Stephanie, 55270 Klein-Winternheim (DE); Heinricht, Frank, 74223 Flein (DE); Rudigier-Voigt, Eveline, 55128 Mainz (DE); Anton, Andrea, 55595 Hüffelsheim (DE)
(74) Representative: Herzog IP Patentanwalts GmbH

(56) References cited:
- WO-A2-2011/029857
- US-A1- 2013 171 456
- US-A1- 2014 116 911

## Description

The present invention refers to a container precursor, comprising a wall of glass which at least partially encloses an interior volume of the container precursor; wherein, on a side of the wall of glass which faces away from the interior volume, the wall of glass is at least partially superimposed by a plurality of particles; wherein the container precursor is a precursor of a packaging container for a medical or a pharmaceutical packaging good or both. Further, the invention refers to an arrangement, comprising a packaging and a multitude of the container precursors; to a process for preparing a functionalised container precursor; to a container; to a process for preparing a functionalised container; to a closed container; to a process for packaging a pharmaceutical composition; and to uses of a container precursor for making a packaging container, of a container for packaging a pharmaceutical composition, and of a plurality of particles.

Containers made from glass have been applied for transporting fluids and powders safely since several centuries. In the last decades, the arts in which glass containers are used for transporting fluids and powders have become increasingly diverse and sophisticated. One such art is the technical field of the present application: pharmaceutical packaging. In the pharmaceutical industry, glass containers - such as vials, syringes, ampoules and cartridges - are applied as primary packaging for all kinds of pharmaceutically relevant compositions, in particular drugs, such as vaccines. Specifically in this art, the requirements put on the glass containers have become more and more sophisticated, recently.

The pharmaceutical glass containers are, typically, cleaned, sterilised, filled and closed, on an industrial scale in a line of processing, referred to as filling line in this document. There is a need to increase a production rate of such a filling line in the art. This may be implemented by increasing a velocity of the filling line and / or by reducing shut down times due to disruptions of the processing. In the prior art, such disruptions are may be caused by the occurrence of breakage of glass containers during processing, in particular due to high transportation velocities on the filling line. If such breakage occurs, production has to be stopped, the line has to be cleaned thoroughly from particles and dust and then the system has to be readjusted before it is started again. Contamination of the glass containers with any kind of pharmaceutically relevant particles, in particular glass particles, or pharmaceutically relevant substances has to be avoided strictly, in particular if parenteralia are packaged.

Further, scratches on the glass surfaces of the containers have to be avoided as far as possible. Scratches on the container surface may hamper an optical inspection of the filled containers, in particular for the presence of pharmaceutically relevant particles. Further, scratching the containers can lead to glass particles or dust being disassociated from the containers. These particles and dust may contaminate the containers on the filling line.

In general, attempts to solve the above problems by applying a coating to the container surface are known in the prior art. The requirements on such coatings are rather sophisticated. They have to withstand high temperatures which occur in a treatment referred to in the art as depyrogenisation. Further, the coatings have to withstand low temperature treatments such as freeze drying. Even more, the coatings have to withstand washing processes, which include increased temperatures and mechanical influences. This means that the advantageous properties which the coating provides to the exterior surface of the container have to be maintained and, in addition, contamination of the container interior with any pharmaceutically relevant particle or substance from the coating has to be avoided. The preceding sophisticated requirements have led to the development of rather complex multilayer coatings of the prior art. Such multilayer coatings are typically complex and costly to apply and thus, run contrary to the need for high processing rates.

Further, the coatings of the prior art are often applied to the glass containers across their whole exterior surface, including the container bottom. While these coatings, however, provide advantageous effects in certain regions of the exterior surface of the containers, their presence in other regions, such as the container bottom, has shown to be disadvantageous. For example, decreasing the static friction of the container bottom has shown to cause disadvantageous behaviour of the containers on a filling line. In particular, containers having bottoms with too low static friction tend to accelerate each other on the filling line which can lead to containers being scratched as they bump into each other or even to containers tilting over and / or falling from the filling line.

Moreover, glass containers for pharmaceutical packaging are often produced from container precursors which have been prepared beforehand. Applying coatings to the containers cannot prevent scratches which stem from handling the container precursors prior to the containers even being formed from the precursors. For the preparation of a container precursor, typically, a semi-endless tubular strand is drawn from a glass melt. This semi-endless strand is cut into multiple shorter tubes, the ends of which are sealed by hot forming the glass. The sealed tubes obtained this way are usually packaged and transported to the manufacturer of the pharmaceutical packaging containers. Accordingly, there is a risk that the glass tubes suffer from scratches and other defects during packaging, shipping and corresponding handling prior to containers being manufactured from the tubes. Production of the glass containers typically involves cutting off and discarding the sealed ends of the tubes and hot forming multiple containers from each open tube. Pharmaceutical glass containers such as vials, syringes, ampoules and cartridges have tubular body regions which have already been present in the corresponding tube from which the container has been prepared. If a tube includes a defect such as a scratch in a region which later on will constitute the tubular body region of a container, the defect will show up in the container made from the tube as well. Therefore, defects in the precursor tubes have to be avoided and thus, the precursor tubes have to be protected as well. In the prior art, this is typically done by applying a temporary organic coating to the tubes. This organic coating is burned off in the process of container production, e.g. in the leer. Hence, in order to avoid scratches, in the prior art, first the precursor tubes are coated and later on a different coating is applied to the glass containers made from the tubes. This solution of the prior art is laborious and cumbersome.

In the prior art, WO 2011/029857 A2 pertains to a method for treating surfaces, especially glass surfaces. Said method is particularly suitable for treating pharmaceutical packaging means made of glass. The method includes the steps of applying a liquid that contains oxide particles, especially SiO₂ particles, to the surface, and drying the liquid. Alternatively, a liquid containing organically bound silicon, such as silicone oil, can be applied to the surface and then be dried and pyrolytically decomposed in order to deposit SiO₂ particles on the surface. The result are improved tribological properties and reduced sensitivity to scratches.

Further, US 2014/0116911 A1 teaches a container with an optically readable particle pattern to provide an attractive marker that is resistant to tampering therewith, for tracking, anti-counterfeiting, or other purposes.

In general, it is an object of the present invention to at least partly overcome a disadvantage arising from the prior art. It is a further object of the invention to provide a precursor for the production of a glass container for pharmaceutical packaging which allows for an increase of a production rate of a filling line. Further, it is an object of the present invention to provide a precursor for the production of a glass container for pharmaceutical packaging which allows for an increase of a processing speed of a filling line, or for a reduction of disruptions of a filling line, or both. It is yet another object of the invention to provide a precursor from which a glass container for pharmaceutical packaging that is less prone to show scratches can be produced. Further, it is an object of the invention to provide a precursor from which a glass container for pharmaceutical packaging that is less prone to being damaged or even broken while being processed on a filling line can be produced. According to another object of the invention, one of the above advantageous precursors is provided, wherein a glass container for pharmaceutical packaging formed from the precursor is further suitable for an easy and reliable optical inspection after having been filled. According to yet another object of the invention, one of the above advantageous precursors is provided, wherein a glass container for pharmaceutical packaging formed from the precursor is further suitable for a post-treatment, for example a sterilisation treatment, which may be effected as a high-temperature-treatment - in particular a depyrogenisation; or a washing process; or a low-temperature-treatment - in particular a freeze drying. According to yet another object of the invention, one of the above advantageous precursors is provided, wherein a glass container for pharmaceutical packaging formed from the precursor does not show an increased tendency to being contaminated in a pharmaceutically relevant manner, preferably the container shows a reduced tendency to being contaminated. The preceding contamination refers, in particular, to the presence of pharmaceutically relevant particles or substances, such as organic substances, in the container interior.

With the claimed precursor a glass container for pharmaceutical packaging which is less prone to have pre-damages is provided. Herein, pre-damages refer to damages which the container inherits from a precursor from which the container is prepared. According to a further object of the invention, the preceding container can be prepared by an as simple as possible process. According to yet another object of the invention, a glass container for pharmaceutical packaging formed from one of the above advantageous precursors is provided. According to another object of the invention, the preceding advantageous container is provided, wherein the container does not have a multilayer coating on a surface, preferably the exterior surface, of the glass container. In particular, no primer layer is needed here. According to yet another object of the invention, an advantageous combination of a multitude of precursors for the production of a glass container for pharmaceutical packaging and a packaging for these precursors is provided, wherein this combination allows for producing containers with as few as possible pre-damages. Therein, the process for producing the containers is, according to another object, as simple as possible, in particular in terms of a number of process steps.

A contribution to at least partly solving at least one, preferably more than one, of the above objects is made by the independent claims. The dependent claims provide preferred embodiments which contribute to at least partly solving at least one of the objects.

A contribution to solving at least one of the objects according to the invention is made by an embodiment 1 of a container precursor 1, comprising a wall of glass which at least partially, encloses an interior volume of the container precursor; wherein, on a side of the wall of glass which faces away from the interior volume, the wall of glass is at least partially superimposed by a plurality of particles; wherein the container precursor is a precursor of a packaging container for a medical or a pharmaceutical packaging good or both. Preferably, the wall of glass forms a hollow glass body which at least partially encloses the interior volume of the container precursor; wherein the hollow glass body has a precursor exterior surface which faces away from the interior volume; wherein the precursor exterior surface is at least partially characterised by a coefficient of dry sliding friction of less than 0.25, preferably less than 0.20, more preferably less than 0.18, more preferably less than 0.16, more preferably less than 0.15, more preferably less than 0.12, more preferably less than 0.10, more preferably less than 0.05, more preferably less than 0.03, most preferably less than 0.02. In a preferred embodiment, the particles of the plurality of particles are directly joined to the wall of glass via Van-der-Waals forces, but not via covalent bonds. In a preferred embodiment, the wall of glass is not superimposed by the plurality of particles on a side of the wall of glass which faces the interior volume. Hence, it is preferred that no particle of the plurality of particles superimposes the wall of glass on a side which faces the interior volume. Preferably, the plurality of particles superimposes the wall of glass on an area which is at least 10 %, preferably at least 20 %, more preferably at least 30 %, more preferably at least 40 %, more preferably at least 50 %, more preferably at least 60 %, more preferably at least 70 %, more preferably at least 80 %, even more preferably at least 90 %, in each case of a total surface area of the wall of glass which faces away from the interior volume, most preferably across the full surface area of the wall of glass which face away from the interior volume.

A contribution to solving at least one of the objects according to the invention is made by an embodiment 1 of an arrangement, comprising
a) a packaging, and
b) a multitude of container precursors, packaged in the packaging,
wherein the container precursors of the multitude of container precursors are designed according to any embodiment of the container precursor 1 of the invention.

A contribution to solving at least one of the objects according to the invention is made by an embodiment 1 of a process 1 for preparing a functionalised container precursor, the process 1 comprising as process steps
a) provision of a container precursor, comprising a wall of glass which at least partially encloses an interior volume of the container precursor;
b) superimposing at least a part of the wall of glass on a side of the wall of glass which faces away from the interior volume with a composition, comprising
   i) a first plurality of particles, and
   ii) a vehicle;
   and
c) decreasing a proportion of the vehicle in the composition, thereby leaving at least a part of
   i) the first plurality of particles, or
   ii) a further plurality of particles, which is obtained in the process step c) from at least a part of the first plurality of particles, or
   iii) a combination of the first and the further plurality of particles superimposed on the wall of glass,
wherein in the process step a) the container precursor is a precursor of a packaging container for a medical or a pharmaceutical packaging good or both.

Preferably, in the process step c) the wall of glass, or the first plurality of particles, or both, at least partially has a temperature in a range from 15 to 650 °C, preferably from 20 to 650 °C, more preferably from 25 to 650 °C, more preferably from 30 to 650 °C, more preferably from 50 to 650 °C, more preferably from 100 to 650 °C, more preferably from 150 to 650 °C, more preferably from 150 to 600 °C, more preferably from 150 to 500 °C, more preferably from 150 to 400 °C, even more preferably from 150 to 350 °C, most preferably from 200 to 300 °C. The temperature is preferably kept in one of the preceding ranges for a duration in a range from 1 min to 24 h, more preferably from 1 min to 12 h, more preferably from 3 min to 6 h, even more preferably from 3 min to 3 h, most preferably from 5 min to 3 h. Preferably, the particles of the further plurality of particles are obtainable from the particles of the first plurality of particles via a chemical reaction. Here, a preferred chemical reaction is an oxidation. Preferably, in the process step b) the composition comprises the vehicle at a proportion in a range from 50 to 99.9 wt.-%, more preferably 80 to 99.5 wt.-%, most preferably 90 to 99.5 wt.-%, based on the weight of the composition in the process step b). Preferably, in the process step c), the proportion of the vehicle in the composition is decreased by at least 50 %, more preferably at least 60 %, more preferably at least 70 %, more preferably at least 80 %, even more preferably at least 90 %, most preferably at least 95 %, in each case based on a proportion of the vehicle in the composition in the process step b). Preferably, in the process step c), the proportion of the vehicle in the composition is decreased to a value in a range from 0 to 50 wt.-%, more preferably 0 to 40 wt.-%, more preferably 0 to 30 wt.-%, more preferably 0 to 20 wt.-%, more preferably 0 to 10 wt.-%, more preferably 0 to 5 wt.-%, most preferably 0 to 1 wt.-%, in each case based on the weight of the residuals of the composition which are left superimposed on the wall of glass after the process step c). In a particularly preferred embodiment, the process step c) comprises completely evaporating the vehicle from the composition. Preferably, the particles which are left superimposed on the wall of glass in the process step c) are not superimposed by any component of the container precursor on a side of the particles which faces away from the wall of glass. Particularly preferable, these particles are not embedded in any material, such as a matrix, for example a polymer matrix. Preferably, the particles adjoin an environment of the container precursor. Preferably, in the process step b) the composition does not comprise any component other than the first plurality of particles which is left as such or in form of a component obtained therefrom through the process step c) superimposed on the wall of glass at a proportion of more than 10 wt.-%, preferably more than 5 wt.-%, more preferably more than 3 wt.-%, most preferably more than 1 wt.-%, based on the weight of the residuals of the composition which are left superimposed on the wall of glass after the process step c). Hence, the residuals of the composition which are left superimposed on the wall of glass after the process step c) do not comprise any component which is different from the particles of the first and the further plurality of particles at a proportion of more than 10 wt.-%, preferably more than 5 wt.-%, more preferably more than 3 wt.-%, most preferably more than 1 wt.-%, based on the weight of these residuals. Further preferably, the particles of the first and the further plurality of particles together make up at least 90 wt.-%, preferably at least 95 wt.-%, more preferably at least 97 wt.-%, most preferably at least 99 wt.-%, in each case of a weight of the residuals of the composition which are left superimposed on the wall of glass after the process step c). In a preferred embodiment, after the process step c) the at least part of the particles of the first plurality of particles, or the further plurality of particles, or both are directly joined to the wall of glass via Van-der-Waals forces, but not via covalent bonds.

A contribution to solving at least one of the objects according to the invention is made by an embodiment 1 of a use 1 of the container precursor 1 according to any of its embodiments for making a packaging container for a medical or a pharmaceutical packaging good.

### Container precursor

Any kind of container precursor which the skilled person knows and which he deems suitable in the context of the invention comes into consideration as the container precursor of the invention. Generally, the container precursor is a precursor of a container which arises in the course of production of the container. Hence, the container precursor is, preferably, designed for producing at least one container, more preferably at least 2, even more preferably at least 10 containers, from the container precursor. The preceding container/containers is/are packaging containers for a medical or a pharmaceutical packaging good or both. A particularly preferred container for a medical or a pharmaceutical packaging good or both is one selected from the group consisting of a vial, a syringe, a cartridge, and an ampoule; or a combination of at least two thereof. Further, in this context, a preferred container includes a hollow glass body which is formed from the wall of glass. In a preferred embodiment, the container precursor consists of the wall of glass. Hence, the container precursor is, preferably, a hollow glass body. The hollow glass body may be open or closed. In case of a closed hollow glass body, the interior volume of the container precursor is, preferably, enclosed by the wall of glass across at least 90 %, preferably across at least 95 %, most preferably at least 99 %, of a surface area of the interior volume. The remainder to 100 % which is not enclosed by the wall of glass, preferably, constitutes a hole which has been provided in the wall of glass for venting. Preferably, the hole for venting has a diameter in the range from 1 to 3 mm. Producing the at least one container from the container precursor, preferably, includes, more preferably consists of, partially reshaping the wall of glass of the container precursor. Herein, partially reshaping means that part of the wall of glass is not reshaped. Preferably that part is of the same shape in the container as in the container precursor from which the container has been produced. The part of the wall of glass which is preferably not reshaped in the production of the container from the container precursor, preferably, has the shape of a hollow cylinder. Further preferably, that part constitutes the body region of the container.

Generally, the container precursor of the invention can have any shape and design which the skilled person deems appropriate for production of a container from the container precursor. A particularly preferred container precursor comprises a tube. The tube is preferably formed from the wall of glass. Herein, a tube is, preferably, a cylinder. The end faces of the cylinder may have any shape which the skilled person deems appropriate. In particular, round end faces, such as circular or oval end faces, and angular end faces, such as rectangular, triangular and polygonal end faces, come into consideration. It is also conceivable that the end faces of the cylinder have different shapes. Further, the cylinder may be a right cylinder, an oblique cylinder or a bend cylinder. Therein, a bend cylinder has a curvature along its length. A particularly preferred cylinder is a right circular cylinder. Herein, the term tube refers to a hollow body which, as such, has open end faces. A preferred container precursor of the invention consists of a tube. In that case, the container precursor has open end faces. A further preferred container precursor of the invention comprises a tube and, in addition, one or two end face parts which each seal an end face of the tube. A container precursor which comprises a tube may or may not include further parts, in addition to the tube, such as one or two end face parts and also further parts. Here, the container precursor, preferably, comprises two end face parts, each of which seals one of the two end faces of the tube. A preferred end face part is formed from the wall of glass.

A particularly preferred container precursor of the invention is a semi-endless tube which has been drawn from a glass melt. That semi-endless tube often has a length of at least 10 m. Typically, that length does not exceed 100 m. Preferably, the semi-endless tube is open at both end faces.

A further particularly preferred container precursor of the invention is a tube which has been obtained by separating the preceding semi-endless tube into a multitude of shorter tubes. These tubes often have lengths of about 1.5 m. In this context, it is further preferred that the container precursor is sealed at one or both, of the end faces of the tube. Here, the tube which has been obtained by separation from the semi-endless tube has, preferably, further been sealed at one or both end faces by heating the wall of glass above the transformation temperature T_{g} of the glass of the wall of glass, preferably above the softening temperature of the glass of the wall of glass, at the respective end face and reshaping the wall of glass in order to seal that end face. In that case, the container precursor comprises the tube and one or two end face parts which seal the tube at the respective end face. Therein, the tube and the one or two end face parts are, preferably, formed from the wall of glass. Further preferably, after sealing, the above mentioned hole for venting is provided in the wall of glass. Producing a container from such container precursor, preferably, includes separating off the end regions of the container precursor, each including one of the end face parts, and partly reshaping the remaining tubular section of the container precursor into one or more, typically at least 10, containers. The term "partly reshaping" herein, preferably, means that each of the containers produced from the tubular section includes a part of the tubular section which is of essentially the same shape as in the container precursor. Each of these parts, preferably, is of the shape of a hollow cylinder.

### Container

The container according to the invention may have any size or shape which the skilled person deems appropriate in the context of the invention. A preferred container of the invention is obtainable from the container precursor of the invention described in the previous paragraph, preferably by the measures described in the previous paragraph.

The first end region of the container is preferably a top region. The further end region of the container is preferably a bottom region. The body region of the container, preferably, follows the top region, preferably via a shoulder, and the bottom region, preferably, follows the body region, preferably via a heel, in each case from top to bottom of the container. A preferred bottom region of the container is a standing base. The bottom region may be planar or concave, wherein a concave bottom region is preferred. Particularly preferable, the bottom region is not convex as a convex surface is not appropriate as a standing base. Preferably, the body region is a lateral region of the hollow body. Particularly preferable, the body region of the wall forms a hollow cylinder. The top region preferably comprises, more preferably consists of, a flange and a neck from top to bottom of the container. Preferably, on the side of the wall of glass which faces away from the interior volume the wall of glass is not superimposed by any part of the plurality of particles at the shoulder or at the heel or both. Preferably, at the shoulder or at the heel or both, in each case on the side of the wall of glass which faces away from the interior volume, the wall of glass is not superimposed by any particle which is joined to the wall of glass. Further preferably, the first and further end regions of the container of the invention are obtainable from the container precursor via the partial reshaping of the container precursor. The body region of the container, preferably, is a part of the container which is of essentially the same shape as in the container precursor from which the container has been produced. Preferably, the first or further end region of the container comprises an opening, which allows for inserting a pharmaceutical composition into the interior volume of the container. In that case, the hollow glass body encloses the interior volume of the container only partially. Preferably, the wall of glass is of a one-piece design. In a particularly preferred embodiment, the hollow glass body of the container of the invention has the shape of a bottle.

For the use in this document, the interior volume of the container is the full volume of the interior of the container. This volume may be determined by filling the interior of the container with water up to the brim and measuring the volume of the amount of water which the interior can take up to the brim. Hence, the interior volume as used herein in the context of the container is not a nominal volume as it is often referred to in the technical field of pharmacy. This nominal volume may for example be less than the interior volume of the container by a factor of about 0.5.

### Wall of glass

The wall of glass of the container and container precursor of the invention may have any shape and design which the skilled person deems appropriate in the context of the invention. Generally, the wall of glass, preferably, forms a wall of a hollow glass body which at least partly encloses the interior volume. Preferably, the wall of glass comprises a weight majority of a glass, more preferably the wall of glass essentially consists of the glass. Further, the wall of glass may be superimposed by one or more additional layers, more preferably at a side of the wall of glass which faces the interior volume. Unless otherwise indicated, the components of the wall of the hollow glass body, in particular the wall of glass, the particles of the plurality of particles and any additional layer which superimposes the wall of glass, may follow one another in a direction of a thickness of the wall indirectly, in other words with one or more intermediate components, or directly, in other words without any intermediate component. This is particularly the case with the formulation wherein one component, for example particles, superimposes another, for example the wall of glass. Further, if a component is superimposed onto a layer or a surface, this component may be contacted with that layer or surface or it may not be contacted with that layer or surface, but be indirectly overlaid onto that layer or surface with another component (e.g. a layer) in-between. If, however, a component adjoins another, in particular if the plurality of particles adjoins the wall of glass, these components are in direct contact without any intermediate component in-between. In any case, the components of the wall of the hollow glass body, in particular the wall of glass, the particles of the plurality of particles and any additional layer which superimposes the wall of glass, are joined to one another. Two components are joined to one another when their adhesion to one another goes beyond Van-der-Waals attraction forces. The particles of the plurality of particles, however, may be joined to the wall of glass through Van-der-Waals attraction forces, or covalent bonds, or both. Preferably, the plurality of particles forms at least a part of the surface of the hollow glass body of the container precursor and / or the container of the invention. Preferably, the plurality of particles forms at least a part of a surface of the container precursor and / or the container which faces away from the interior volume.

### Glass

The glass of the wall of glass may be of any type of glass and any glass composition which the skilled person deems suitable in the context of the invention. Preferably, the glass is suitable for pharmaceutical packaging. Particularly preferable, the glass is of type I in accordance with the definitions of glass types in section 3.2.1 of the European Pharmacopoeia, 7^{th} edition from 2011. Additionally or alternatively preferable to the preceding, the glass is selected from the group consisting of a borosilicate glass, an aluminosilicate glass, and fused silica; or a combination of at least two thereof. For the use in this document, an aluminosilicate glass is a glass which has a content of Al₂O₃ of more than 8 wt.-%, preferably more than 9 wt.-%, particularly preferable in a range from 9 to 20 wt.-%, in each case based on the total weight of the glass. A preferred aluminosilicate glass has a content of B₂O₃ of less than 8 wt.-%, preferably at maximum 7 wt.-%, particularly preferably in a range from 0 to 7 wt.-%, in each case based on the total weight of the glass. For the use in this document, a borosilicate glass is a glass which has a content of B₂O₃ of at least 1 wt.-%, preferably at least 2 wt.-%, more preferably at least 3 wt.-%, more preferably at least 4 wt.-%, even more preferably at least 5 wt.-%, particularly preferable in a range from 5 to 15 wt.-%, in each case based on the total weight of the glass. A preferred borosilicate glass has a content of Al₂O₃ of less than 7.5 wt.-%, preferably less than 6.5 wt.-%, particularly preferably in a range from 0 to 5.5 wt.-%, in each case based on the total weight of the glass. In a further aspect, the borosilicate glass has a content of Al₂O₃ in a range from 3 to 7.5 wt.-%, preferably in a range from 4 to 6 wt.-%, in each case based on the total weight of the glass.

A glass which is further preferred according to the invention is essentially free from B. Therein, the wording "essentially free from B" refers to glasses which are free from B which has been added to the glass composition by purpose. This means that B may still be present as an impurity, but preferably at a proportion of not more than 0.1 wt.-%, more preferably not more than 0.05 wt.-%, in each case based on the weight of the glass. In the art of glass making, the content of B of a glass is often provided based on B₂O₃, although the B does not necessarily have to be present in the glass in the form this particular oxide. Therefore, the preceding contents have been based on B, no matter in which particular chemical form it is present, be it in a compound, such as an oxide, or in elemental form or in a combination of different forms.

### Alkali metal barrier layer and hydrophobic layer

In a preferred embodiment, the wall of glass of the container is superimposed by an alkali metal barrier layer or by a hydrophobic layer or both, in each case towards the interior volume of the container. Preferably, the alkali metal barrier layer or by the hydrophobic layer or both form at least a part of the interior surface, preferably the full interior surface. The alkali metal barrier layer may consist of any material or any combination of materials which the skilled person deems suitable for providing a barrier action against migration of an alkali metal ion, preferably against any alkali metal ion. The alkali metal barrier layer may be of a multilayer structure. Preferably, the alkali metal barrier layer comprises SiO₂, preferably a layer of SiO₂. Further, the hydrophobic layer may consist of any material or any combination of materials which provides a layer surface towards the interior volume which has a contact angle for wetting with water of more than 90°. The hydrophobic layer preferably allows for the formation of a well-defined cake upon freeze-drying, in particular in terms of a shape of the cake. A preferred hydrophobic layer comprises a compound of the general formula SiOₓC_{y}H_{z}, preferably a layer of this compound. Therein, x is a number which is less than 1, preferably in a range from 0.6 to 0.9, more preferably from 0.7 to 0.8; y is a number in a range from 1.2 to 3.3, preferably from 1.5 to 2.5; and z is a number as well.

### Particle size distribution

The D₅₀ of a particle size distribution provides the particle diameter for which 50 % of all particles of the plurality of particles having this particle size distribution have diameters smaller than this value. The D₁₀ of a particle size distribution provides the particle diameter for which 10 % of all particles of the plurality of particles having this particle size distribution have diameters smaller than this value. The D₉₀ of a particle size distribution provides the particle diameter for which 90 % of all particles of the plurality of particles having this particle size distribution have diameters smaller than this value. The D₁₀, D₅₀ and D₉₀ are further defined by the method of measurement of the particle size distribution as provided herein.

### Aspect ratio

The aspect ratio is the quotient of the length of a particle divided its thickness. In Cartesian coordinates, the length of a particle lies on one axis, the width of the particle lies on another axis and the thickness on still another axis. Here, the length is more than the width which is more than the thickness of the particle.

### Dispersion

The composition of the process 1 according to the invention is preferably a dispersion. Generally, a dispersion is a system in which particles are dispersed in a continuous phase. There are three main types of dispersions: a coarse dispersion which is also referred to as suspension, a colloid, and a solution. A suspension is a heterogeneous mixture that contains solid particles sufficiently large for sedimentation. The particles may be visible to the naked eye, usually must be larger than 1 micrometre, and will eventually settle. A suspension is a heterogeneous mixture in which the dispersed particles do not dissolve, but get suspended throughout the bulk of the continuous phase, left floating around freely in the medium. The particles may be dispersed throughout the continuous phase through mechanical agitation, with the use of certain excipients or suspending or dispersing agents. The suspended particles are visible under a microscope and will settle over time if left undisturbed. This distinguishes a suspension from a colloid, in which the dispersed particles are smaller and do not settle. Colloids and suspensions are different from a solution, in which the particles do not exist as a solid, but are dissolved. The composition of the invention is preferably a dispersion in which solid particles, in particular the first plurality of particles, are dispersed in a liquid phase, referred to herein as vehicle. In the context of the composition of the invention, a preferred dispersion is a suspension.

### Vehicle

As the vehicle each vehicle which the skilled person knows and deems appropriate for being used in the context of the invention comes into consideration. Here, the vehicle is a, preferably liquid, medium which allows for the at least partial superposition of the first plurality of particles onto the wall of glass in a convenient, preferably uniform, manner. Preferably, the vehicle has a viscosity which is suitable for the preceding purpose. Further preferably, the vehicle has a rather high vapour pressure which allows for decreasing the proportion of the vehicle in the composition through evaporation of the vehicle in the process step c) at a temperature as close to 20 °C as possible. In a case in which the composition is a dispersion, the vehicle is preferably the continuous, preferably liquid, phase of the dispersion.

### Dispersing agent

In the process step b) of the process 1 according to the invention, the composition preferably comprises one or more dispersing agents. Here, any dispersing agent which the skilled person knows and which he deems appropriate to be utilised in the context of the invention comes into consideration. Preferably, the dispersing agent supports keeping the particles of the first plurality of particles dispersed throughout the vehicle as homogenously as possible. A preferred dispersing agent is one selected from the group consisting of a polyacrylic acid, a polyimine, para-toluolsulfonic acid, a polyvinylpyrrolidone, a polyethylenglycol, hydroxypropylcellulose, an additive for inkjet inks, and a wetting or dispersing additive from the DISPERBYK series which is commercially available from BYK-Chemie GmbH, Wesel, Germany; or a combination of at least two thereof. Therein, a polyacrylic acid is a particularly preferred dispersing agent if the composition has a pH of more than 7. Further, a polyimine is a particularly preferred dispersing agent if the composition has a pH of less than 7. A preferred additive for inkjet inks is an additive of the BYKJET series which is commercially available from BYK-Chemie GmbH, Wesel, Germany. In a case in which the particles of the first plurality of particles comprise, preferably consist of, PDMS an alternatively or additionally preferred dispersing agent is selected from the group consisting of a silicon oligomer with short chains, a stearate, and a laurate, or from a combination of at least two thereof. A preferred silicon oligomer with short chains has a viscosity in a range from 5·10⁻⁴ to 100·10⁻⁴ m²/s.

### Polyalkylsiloxanes

In the context of the invention, any polyalkylsiloxane which the skilled person knows and deems appropriate for any of the purposes of the invention comes into consideration for the particles of the plurality of particles of the container precursors and the containers 1 and 2 according to the invention, and for the first and further plurality of particles of the process 1 according to the invention, as well as for the plurality of particles of the use 3 according to the invention. A preferred polyalkylsiloxane is a polymethylsiloxane. A preferred polymethylsiloxane is a polydimethylsiloxane (PDMS).

### Depyrogenisation

Particularly preferable, the heating after the process step a. and prior the process step b. of the process 3 is a measure of a depyrogenisation step. In the technical field of pharmacy, depyrogenisation is a step of decreasing an amount of pyrogenic germs on a surface, preferably via a heat-treatment. Therein, the amount of pyrogenic germs on the surface is preferably decreased as much as possible, preferably by at least 80 %, more preferably at least 90 %, more preferably at least 95 %, even more preferably at least 99 %, even more preferably at least 99.5 %, most preferably by 100 %, in each case based on an amount of the pyrogenic germs on the surface prior to the depyrogenisation.

### Pharmaceutical composition

In the context of the invention, every pharmaceutical composition which the skilled person deems suitable comes into consideration. A pharmaceutical composition is a composition comprising at least one active ingredient. A preferred active ingredient is a vaccine. The pharmaceutical composition may be fluid or solid or both, wherein a fluid composition is particularly preferred herein. A preferred solid composition is granular such as a powder, a multitude of tablets or a multitude of capsules. A further preferred pharmaceutical composition is a par-enterialium, i.e. a composition which is intended to be administered via the parenteral route, which may be any route which is not enteral. Parenteral administration can be performed by injection, e.g. using a needle (usually a hypodermic needle) and a syringe, or by the insertion of an indwelling catheter.

### MEASUREMENT METHODS

The following measurement methods are to be used in the context of the invention. Unless otherwise specified, the measurements have to be carried out at an ambient temperature of 23°C, an ambient air pressure of 100 kPa (0.986 atm) and a relative atmospheric humidity of 50%.

### Contact angle for wetting with water

The contact angle of a surface for wetting with water is determined in accordance with the standard DIN 55660, parts 1 and 2. The contact angle is determined using the static method. Deviating from the standard, the measurement is conducted at curved surfaces as the walls of the container precursor and the container are usually curved. Further, the measurements are conducted at 22 to 25 °C ambient temperature and 20 to 35 % relative atmospheric humidity. A Drop Shape Analyzer - DSA30S from Krüss GmbH is applied for the measurements. Uncertainty of the measurement increases for contact angles below 10°.

### Wall thickness and tolerance of wall thickness

The wall thickness and deviations from the mean value of the wall thickness (tolerance) are determined in accordance with the following standards for the respective type of container:
DIN ISO 8362-1 for vials,
DIN ISO 9187-1 for ampoules,
DIN ISO 110 4 0- 4 for syringes,
DIN ISO 13926-1 for cylindrical cartridges, and
DIN ISO 11040-1 for dental cartridges.

### Softening temperature

The softening temperature of a glass is defined as the temperature of the glass at which the glass has a viscosity η in dPa·s (= Poise) such that log₁₀(η) = 7.6. The softening temperature is determined in accordance with ISO 7884-3.

### Transformation temperature T_{g}

The transformation temperature is determined in accordance with ISO 7884-8.

### Transmission coefficient

Herein, the transmission coefficients are defined as T = Iₜᵣₐₙₛ / I₀, wherein I₀ is the intensity of the light which is incident at a right angle on an incidence region of the surface region and Iₜᵣₐₙₛ is the intensity of the light which leaves the container precursor or the container, respectively, on a side which is opposite to the incidence region. Hence, T refers to light which transmits the empty container precursor / the container completely, i.e. one time through the wall into the empty interior volume and from there a second time through the wall out of the interior volume. Hence, the light transmits through two curved sections of the wall of the container precursor / the container. The transmission coefficient is determined in accordance with the standard ISO 15368:2001(E), wherein an area of measurement of the dimensions 3 mm × 4 mm is used. Further, the light is incident on the container precursor / the container at a right angle to the vertical extension and through a central axis of the container precursor / the container. Preferably, the transmission coefficients of containers herein refer to a container of the type 2R according to DIN/ISO 8362 and/or to a transmission of the light through a part of the container precursor / the container which is of the shape of a hollow cylinder.

### Haze

The haze is a measure for the light scattering properties of a transparent sample, such as a glass sample. The value of the haze represents the fraction of light which has been transmitted through the sample, here the container precursor or empty container, and which is scattered out of a certain spatial angle around the optical axis. Thus, the haze quantifies material defects in the sample which negatively affect transparency. Herein, the haze is determined according to the standard ASTM D 1033. In accordance with this standard, 4 spectra are measured and for each of them the transmission coefficient is calculated. The haze value in % is calculated from these coefficients of transmission. A Thermo Scientific Evolution 600 spectrometer with integrating sphere and the software OptLab-SPX are applied for the measurements. In order to allow for measuring the diffusive transmission, the sample is positioned in front of the entrance of the integrating sphere. The reflection opening is left empty such that only the transmitted and scattered fraction of the incident light is detected. The fraction of the transmitted light which is not sufficiently scattered is not detected. Further measurements pertain to detection of the scattered light in the sphere (without sample) and to the overall transmission of the sample (reflection opening closed). All the measurement results are normalised to the overall transmission of the sphere without sample which is implemented as obligatory baseline correction in the software. Herein, the haze refers to light which transmits the container precursor / the container completely, i.e. one time through the wall into the interior volume and from there a second time through the wall out of the interior volume. Hence, the light transmits through two curved sections of the wall of the container precursor / the container. Further, the light is incident on the container precursor / the container at a right angle to the vertical extension and through a central axis of the container precursor / the container. The container, preferably, is a vial of the type 2R according to DIN/ISO 8362 and / or the transmission is conducted through a part of the container precursor / the container which is of the shape of a hollow cylinder.

### Scratch test and coefficient of dry sliding friction

An MCT MikroCombiTester (MCT S/N 01-04488) from CSM Instruments is applied for the scratch test and for measuring the coefficient of dry friction. As the friction partner, a container precursor / the container which is identical to the container precursor / the container to be tested, including any coatings or functionalisations, is used. Further, in the test same surfaces are scratched / slid against each other. The friction partner is hold in position by a special mount above the container precursor / the container to be tested. Here, the friction partner and the container precursor / the container to be tested incline an angle of 90° in a top view. For both measurements, the specimen to be tested is moved forwards, thereby scratching over the surface of the friction partner at a well-defined normal force (test force). For both tests, the specimen to be measured is moved forwards underneath the friction partner at a velocity of 10 mm/min over a test length of 15 mm. In case of the scratch test, the test force is progressively increased from 0 to 30 N (load rate 19.99 N/min) across the test length. Afterwards, the scratched surface is checked with a microscope at a magnification of 5 times. In case of measuring the coefficient of dry sliding friction, a constant normal force of 0.5 N is applied. The lateral friction force is measured using the friction measuring table. The coefficient of dry sliding friction is determined from the measured curves as the ratio of friction force to normal force (test force), wherein only values after the initial 0.2 mm up to the full test length of 15 mm are considered, in order to minimise the influence of the static friction.

### Coefficient of static friction

The coefficient of static friction is determined at an inclined plane. The specimen is placed with the surface to be tested onto a SCHOTT Nextrema^{®} ceramic glass plate which is commercially available from Schott AG. Further, a 75 g-weight is placed on top of the specimen with a piece of leather in-between. The angle of inclination of the ceramic glass plate is increased slowly until the specimen starts to slide down the inclined plane. The angle at which the sliding starts is measured. The coefficient of static friction is determined as the tangent of this angle (tan α).

### Cover ratio

Here, a topographical measurement of the surface to be studied is conducted with a white-light-spectrometer of the type Coherence Scanning Interferometry/Phase Shift Interferometry (CSI/PSI) from Zygo Corporation. The cover ratio is calculated from the obtained topographical image. The sum of the particles is divided by the total area of measurement.

### Particle size distribution

The particle size distribution is determined by dynamic light scattering (DLS). A Delsa^{™} Nano HC from Beckman Coulter is applied for the measurement. A sample of about 1 ml of the particles to be studied is taken. The sample is inserted into a plastic cuvette together with a liquid medium which is suitable for obtaining a dispersion. Therein, the liquid medium is to be chosen depending on the specific particles to be studied. In particular, the liquid medium is to be chosen such that a stable dispersion can be obtained in which the particles are visible for the measurement. In the case of the polymethylsiloxane particles (Tospearls 145A from Momentive Performance Materials Inc.) used in the examples below, n-butanol is to be used as the liquid medium. If the sample is a dispersion which is very opaque, it is diluted until the laser intensity is above 10 %. The sample is measured in accordance with the standard method of the measurement device as 25 °C. Therein, the algorithm calculates the diameter from 850 measurements. The standard software of the measuring device creates a diagram which shows the relative intensity of the measurements versus the particle diameter. The respective arithmetic mean and the standard deviation are provided by the software as well.

### Aspect ratio

The aspect ratio of the particles is determined using an optical microscope or a scanning electron microscope. In each case, lengths and thicknesses of 10 arbitrarily chosen particles of the plurality of particles to be studied are measured and the arithmetic mean value is determined.

### Decomposition temperature

Herein, the decomposition temperature of the particles of a plurality of particles is determined by taking a picture of a sample of the particles under a scanning electron microscope (SEM) at a suitable magnification as reference. Then, this sample is heated in an oven to the test temperature, kept at that test temperature for 1 hour and then cooled down again passively. Afterwards, the sample is examined under the SEM again at the same magnification. If particles can still be identified in the sample, the particles at least partially have a decomposition temperature which is above the test temperature. Therein, the particles may have shrunken in diameter in comparison to prior to the heat treatment. In that case, not all parts of the particles have a decomposition temperature above the test temperature, but still the particles at least partially have a decomposition temperature which is above the test temperature.

The invention is set out in more detail below by means of examples and drawings, with the examples and drawings not denoting any restriction on the invention. Furthermore, unless otherwise indicated, the drawings are not to scale.

### Washing procedure

A HAMO LS 2000 washing machine is applied for the washing procedure. The HAMO LS 2000 is connected to the purified water supply. Further, the following devices are used.
cage 1: 144 with 4 mm nozzles
cage 2: 252 with 4 mm nozzles
drying cabinet from Heraeus (adjustable up to 300 °C)

The tap is opened. Then the machine is started via the main switch. After conducting an internal check, the washing machine shows to be ready on the display. Program 47 is a standard cleaning-program which operates with the following parameters:
pre-washing without heating for 2 min
washing at 40 °C for 6 min
pre-rinsing without heating for 5 min
rinsing without heating for 10 min
end-rinsing at without heating for 10 min
drying without heating for 5 min

The holder in the cages 1 and 2 have to be adjusted considering the size of the tubes / vials in order to obtain a distance of the nozzle of about 1.5 cm. The tubes / vials to be washed are placed on the nozzles, in case of vials with the heads first. Subsequently, the stainless steel mesh is fixed on the cage. The cage is oriented to the left and pushed into the machine. Then the machine is closed. Program 47 (GLAS040102) is selected and then the HAMO is started via START. After the program has finished (1 h), the cages are taken out and the tubes / vials are placed in drying cages, in case of vials with their openings facing downwards. A convection drying cabinet with ambient air filter is applied for the drying. The drying cabinet is adjusted to 300 °C. The tubes / vials are placed into the drying cabinet for 20 min. After the tubes / vials have cooled down, they are sorted into appropriate boxes.

### Preparation of compositions

### Composition 1:

5000 g of isopropanol are provided in a beaker. 300 g of tetraethoxysilane are added to the beaker and the obtained composition is stirred for 320 s with a magnetic stirrer at ambient temperature of 20 °C. Further, 320 g of polysilsesquioxane particles (Tospearls 145A from Momentive Performance Materials Inc.) are added. The composition is stirred for another 4 h at the ambient temperature. The thus obtained suspension is ready for use.

### Composition 2:

5000 g of high purity water are provided in a beaker. 300 g of tetraethoxysilane are added to the beaker and the obtained composition is stirred for 60 s with a magnetic stirrer at ambient temperature of 20 °C. Subsequently, 1000 g of a polydimethylsiloxane (viscosity of 50·10⁻⁴ m²/s) are added while the composition is stirred. Then, the composition is heated to 30 °C. Further, 320 g of polysilsesquioxane particles (Tospearls 145A from Momentive Performance Materials Inc.) are added. The composition is stirred for another 4 h at 30 °C. The thus obtained suspension is ready for use.

### Composition 3:

5000 g of high purity water are provided in a beaker. 300 g of tetraethoxysilane are added to the beaker and the obtained composition is stirred for 60 s with a magnetic stirrer at ambient temperature of 20 °C. Subsequently, 1000 g of a polydimethylsiloxane (viscosity of 50·10⁻⁴ m²/s) are added while the composition is stirred. Then, the composition is heated to 30 °C. Further, 320 g of polysilsesquioxane particles (Tospearls 145A from Momentive Performance Materials Inc.) and 50 g of the dispersing agent DISPERBYK-103 which is available from BYK-Chemie GmbH, Wesel, Germany are added. The composition is stirred for another 4 h at 30 °C. The thus obtained suspension is ready for use.

### Example 1 (according to the invention)

A commercially available glass tube of the type "Fiolax clear" from Schott AG is provided. The surface of this tube does not have any coating or functionalisation. This tube is washed as described above. The venting hole of the tube is closed by applying a small patch of adhesive tape. The washed tube is immersed into the composition 1, which has been prepared as set out above, and drawn through the composition at a velocity of 5 cm/min. As the tube is sealed at both ends, its inner surface is not contaminated thereby. Afterwards, the tube is withdrawn from the composition. The patch of adhesive tape is removed. Subsequently, the tube is placed in an oven where the tube is dried by keeping it at a temperature of 600 °C for 120 s. Afterwards, the tube is passively cooled to room temperature of 20 °C.

### Example 2 (according to the invention)

A commercially available glass tube of the type "Fiolax clear" from Schott AG is provided. The surface of this tube does not have any coating or functionalisation. This tube is washed as described above. The venting hole of the tube is closed by applying a small patch of adhesive tape. The washed tube is immersed into the composition 2, which has been prepared as set out above, and drawn through the composition at a velocity of 5 cm/min. As the tube is sealed at both ends, its inner surface is not contaminated thereby. Afterwards, the tube is withdrawn from the composition. The patch of adhesive tape is removed. Subsequently, the tube is placed in an oven where the tube is dried by keeping it at a temperature of 600 °C for 120 s. Afterwards, the tube is passively cooled to room temperature of 20 °C.

### Example 3 (according to the invention)

A commercially available glass tube of the type "Fiolax clear" from Schott AG is provided. The surface of this tube does not have any coating or functionalisation. This tube is washed as described above. The venting hole of the tube is closed by applying a small patch of adhesive tape. The composition 3, which has been prepared as set out above, is sprayed onto the washed tube homogeneously. As the tube is sealed at both ends, its inner surface is not contaminated thereby. The patch of adhesive tape is removed. Subsequently, the tube is placed in an oven where the tube is dried by keeping it at a temperature of 600 °C for 120 s. Afterwards, the tube is passively cooled to room temperature of 20 °C.

### Example 4 (according to the invention)

Example 4 is conducted as example 3, wherein the tube, onto which the composition 1 has been sprayed, is dried at ambient temperature of 20 °C.

### Example 5 (according to the invention)

A glass tube of length 10 m is prepared via a Danner process as described in detail in "Schott Guide to Glass", Heinz G. Pfaender (Ed.), 2nd Edition, Chapman and Hall, London, 1996, pages 93f, ISBN: 0412719606. This semi-endless glass tube is a precursor of the "Fiolax clear"-glass tube from Schott AG. Hence, it is made from glass of the same composition. Directly after the drawing process, the fresh outer glass surface of the still hot (400 to 500 °C) glass tube is sprayed homogeneously with composition 1. Afterwards, the tube is passively cooled to room temperature of 20 °C.

### Evaluation of glass tubes as container precursors

For each of the examples 1 to 5, the contact angle for wetting with water and the coefficient of dry sliding friction are determined on the lateral exterior surfaces of the tubes which have been functionalised as described above. For comparison, the preceding parameters are also measured at a glass tube of the type "Fiolax clear" from Schott AG, which has been washed, but not functionalised or coated prior to the measurements. Further, scratch tests as described above are conducted on the functionalised tubes of the examples 1 to 5 and on the washed reference tubes without functionalisation. The results are shown in Table 1. Here, + means that in the scratch tests, the corresponding tubes are less prone to be scratched than tubes which have been assessed with -. In particular, the tubes according to the examples 1 to 5 show an improvement of their scratch resistance with respect to the reference tube at least up to test forces of 5 N.

**Table 1: Characterisation of the exterior surfaces of the functionalised glass tubes of the examples 1 to 5 and of a glass tube which has been washed but not functionalised as reference**

| **Example** | **Contact angle for water [°]** | **Coefficient of dry sliding friction of exterior tube surface** | **Scratch resistance** |
|---|---|---|---|
| Example 1 | 30 | 0.01 | + |
| Example 2 | 30 | 0.15 | + |
| Example 3 | 32 | 0.18 | + |
| Example 4 | 30 | 0.02 | + |
| Example 5 | 30 | 0.01 | + |
| Glass tube " Fiolax clear" from Schott AG | < 10 | 0.56 | - |

Further, the transmission coefficients and the haze values of the functionalised tubes of the examples 1 to 5 and of a glass tube which has been washed but not functionalised have been measured as described above in the measurement methods section. It has been found that the transmission coefficients are all the same for the functionalised tubes of the examples 1 to 5 and for the reference glass tube without functionalisation. Further, it has been found that the haze of the functionalised tubes of the examples 1 to 5 is not more than 0.3 % above the haze of the unfunctionalised reference tube.

### Preparation of vials from the functionalised tubes of examples 1 to 5

Glass vials of the type "Vial 2.00 ml Fiolax clear" from Schott AG are prepared from the functionalised tubes of the examples 1 to 5 as container precursors. In case of the example 5, the 10 m long glass tube is first cut into multiple glass tubes of the same length as the " Fiolax clear"-glass tubes of the examples 1 to 4. In case of the examples 1 to 4, the sealed ends of the tubes are cut off and discarded. Then multiple vials are produced from each tube of the examples 1 to 4, which has been prepared this way, and from each shortened tube of the example 5, in each case via a standard hot forming process. The top and bottom regions of each vial are formed by heating and reshaping corresponding regions of the functionalised tube. As these corresponding regions of the functionalised tube are heated to temperatures above 1,200 °C, the particles which the glass tube has been functionalised with are molten into the glass wall in these regions. Accordingly, the vial does not show any functionalisation in its top region, shoulder, heel and bottom region. The body region of the vial, however, is constituted by a part of the functionalised glass tube which is not reshaped in the heat forming process. Therefore, the vials of the examples 1 to 5 have body regions which still show the functionalisation that has been applied to the glass tubes used as container precursors.

### Comparative example 1 (not according to the invention)

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described above. The washed vial is immersed with its bottom first into the composition 1, which has been prepared as set out above, at a velocity of 30 cm/min. Therein, the head region of the vial, including the vial opening, is not immersed into the composition in order to prevent contacting the interior surface of the vial with the composition. The vial is kept in the composition for about 10 s. Afterwards, the vial is retracted from the composition at a velocity of 5 cm/min. Subsequently, the vial is kept as it is for 10 s at ambient temperature of 20 °C. Then the vial is placed with its bottom onto an absorbent substrate such as a paper towel. Then the composition which has been applied to the vial is dried by keeping the vial for 30 min at a temperature of 600 °C in an oven. Afterwards, the vial is passively cooled to room temperature of 20 °C.

### Comparative example 2 (not according to the invention)

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described above. The washed vial is immersed with its bottom first into the composition 2, which has been prepared as set out above, at a velocity of 30 cm/min. Therein, the head region of the vial, including the vial opening, is not immersed into the composition in order to prevent contacting the interior surface of the vial with the composition. The vial is kept in the composition for about 10 s. Afterwards, the vial is retracted from the composition at a velocity of 5 cm/min. Subsequently, the vial is kept as it is for 10 s at ambient temperature of 20 °C. Then the vial is placed with its bottom onto an absorbent substrate such as a paper towel. Then the composition which has been applied to the vial is dried by keeping the vial for 10 min at a temperature of 350 °C in an oven. Afterwards, the vial is passively cooled to room temperature of 20 °C.

### Comparative example 3 (not according to the invention)

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described above. The washed vial is immersed with its bottom first into the composition 3, which has been prepared as set out above, at a velocity of 30 cm/min. Therein, the head region of the vial, including the vial opening, is not immersed into the composition in order to prevent contacting the interior surface of the vial with the composition. The vial is kept in the composition for about 10 s. Afterwards, the vial is retracted from the composition at a velocity of 5 cm/min. Subsequently, the vial is kept as it is for 10 s at ambient temperature of 20 °C. Then the vial is placed with its bottom onto an absorbent substrate such as a paper towel. Then the composition which has been applied to the vial is dried by keeping the vial for 10 min at a temperature of 350 °C in an oven. Afterwards, the vial is passively cooled to room temperature of 20 °C.

### Comparative example 4 (not according to the invention)

A commercially available glass vial of the type "Vial 2.00 ml Fiolax clear" from Schott AG, which of the type 2R according to DIN/ISO 8362, is provided as a reference. The surface of this vial does not have any coating or functionalisation.

### Comparative example 5 (not according to the invention)

A commercially available glass vial of the type "Vial 2.00 ml Fiolax clear" from Schott AG, which of the type 2R according to DIN/ISO 8362, is coated on its exterior surface with MED 10-6670 from NuSiL.

### Comparative example 6 (not according to the invention)

A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described above. Then the vial is placed inside a SCS Labcoater^{®}, Model PDS 2010. Via a vacuum process, the vial is first functionalised with 3-methacrylaoxypropyltrimethoxysilane by evaporation without further heat treatment and then coated with Parylen C by evaporation at 100 °C. The final coating has a film thickness of 250 nm.

### Comparative Example 7 (not according to the invention)

Preparation of the composition:
99.8 ml of high purity water are provided in a beaker. 0.2 ml of Levasil CS50-34P (50 % SiO₂, average particle size less than 100 nm) from Akzo Nobel N.V. are added to the beaker and the obtained composition is stirred for 30 s with a magnetic stirrer at ambient temperature of 20 °C. Subsequently, 0.5 ml g of Tween20 from Sigma Aldrich are added. Then, the composition is stirred for another 10 min. The thus obtained composition is ready for use.

Functionalisation with the composition:
A commercially available glass vial of the type "Vial 2.00 ml Fiolax clear" from Schott AG, which is further of the type 2R according to DIN/ISO 8362, is provided. The surface of this vial does not have any coating or functionalisation. This vial is washed as described above. The washed vial is immersed with its bottom first into the composition, which has been prepared as set out above, at a velocity of 30 cm/min. Therein, the head region of the vial, including the vial opening, is not immersed into the composition in order to prevent contacting the interior surface of the vial with the composition. The vial is kept in the composition for 2 s. Afterwards, the vial is retracted from the composition at a velocity of 20 cm/min. Subsequently, the vial is kept as it is for 10 s at ambient temperature of 20 °C. Then the vial is placed with its bottom onto an absorbent substrate such as a paper towel. Then the composition which has been applied to the vial is dried by keeping the vial for 30 min at a temperature of 600 °C in an oven.

### Evaluation of containers

Further, each of the examples 1 to 5 and the comparative examples 1 to 7, the contact angle for wetting with water and the coefficient of dry sliding friction are determined on the exterior surface of the vial body region (hollow cylindrical part) in accordance with the above measurement methods, respectively. Further, the coefficient of static friction is measured on the exterior surface of the bottom (standing base) of the vials. The results are shown in Table 2.

**Table 2: Characterisation of the exterior surfaces of the glass vials of the examples and comparative examples by their contact angles for wetting with water and coefficients of dry sliding friction (body region) and static friction (bottom), in each case prior to any post treatment**

| **Example** | **Contact angle for water [°]** | **Coefficient of dry sliding friction of container body region** | **Coefficient of static friction of container bottom** |
|---|---|---|---|
| Example 1 | 30 | 0.01 | 0.24 |
| Example 2 | 30 | 0.15 | 0.25 |
| Example 3 | 32 | 0.18 | 0.22 |
| Example 4 | 30 | 0.02 | 0.26 |
| Example 5 | 30 | 0.01 | 0.22 |
| Comparative example 1 | 34 | 0.01 | 0.14 |
| Comparative example 2 | 26 | 0.18 | 0.15 |
| Comparative example 3 | 43 | 0.20 | 0.16 |
| Comparative example 4 | < 10 | 0.56 | 0.24 |
| Comparative example 5 | 70 | 0.28 | 0.20 |
| Comparative example 6 | 93 | 0.45 | 0.24 |
| Comparative example 7 | < 10 | 0.41 | 0.28 |

Further, 10,000 of the vials of each example and comparative example, respectively, are processed on a standard pharmaceutical filling line and thus, filled with an influenza vaccine. Table 3 below shows an evaluation of the vials regarding their tendency to be damaged on the filling line. Here, damages refer to scratches which the vials suffer or even glass breakage. The latter can, in particular, occur of vials bump into each other and thereby, one of the collision partners is accelerated such that it is tipped over. Further, breakage can occur by vials rubbing against each other, which can lead to a vial being lifted and tipped over. In Table 3, ++ indicates a more favourable result than +, which indicates a more favourable result than 0, which indicates a more favourable result than -.

**Table 3: Comparison of the tendency of the glass vials to be damaged on the filling line for the examples and comparative examples**

| **Example** | **Low tendency to damages on filling line** |
|---|---|
| Example 1 | ++ |
| Example 2 | + |
| Example 3 | + |
| Example 4 | ++ |
| Example 5 | ++ |
| Comparative example 1 | 0 |
| Comparative example 2 | 0 |
| Comparative example 3 | 0 |
| Comparative example 4 | - |
| Comparative example 5 | - |
| Comparative example 6 | - |
| Comparative example 7 | - |

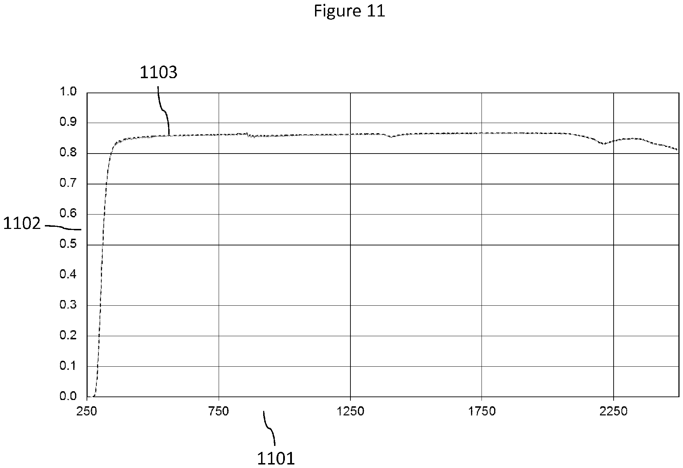

Further, the vials of the examples 1 to 5 and of the comparative example 4 are studied for their optical characteristics which may influence an optical inspection of the vials, in particular for pharmaceutically relevant particles, after being filled with a vaccine and being closed. These studies are conducted prior to filling the vials. Here, the increase of the haze by the functionalisation of the examples 1 to 5 is determined in accordance with the above measurement method to be less than 0.3 % of the haze of an unfunctionalised reference vial of comparative example 4. Further, the transmission coefficients of vials of the examples 1 to 5 and of a reference vial of comparative example 4 are determined in accordance with the above measurement method. Figure 11 shows the transmission coefficients of empty vials of the examples 1 to 5 and of comparative example 4 across a broad spectral range. From this figure, it can clearly be seen that the functionalisations according to the examples 1 to 5 do not significantly deteriorate the transmission coefficient in the studied spectral range.

For further studies, functionalised surfaces of vials according to the examples 1 to 5 and the comparative example 4 have been subjected to a scratch test which is described in detail in the above measurement methods sections. It has been shown that the vials according to the examples 1 to 5 show an improvement of their scratch resistance with respect to the reference vial of comparative example 4 at least up to test forces of 5 N.

### Post-treatment

For further studies, the vials of the example 1 and of the comparative example 4 as reference are subjected to two different kinds of post-treatment, i.e. a depyrogenisation procedure and freeze drying. These kinds of post-treatment are described below.

### Depyrogenisation:

The vials are depyrogenised by placing them in an oven which is heated to 350 °C. This temperature is kept constant for 1 h. Subsequently, the vials are taken out of the oven and left to cool down.

### Freeze drying:

The vials are freeze dried by storing them for 4 hours at -70 °C.

### Evaluation after post-treatment

Vials of the examples 1 and 2 and of the comparative example 4 have been washed and then subjected to either depyrogenisation or freeze drying, respectively.

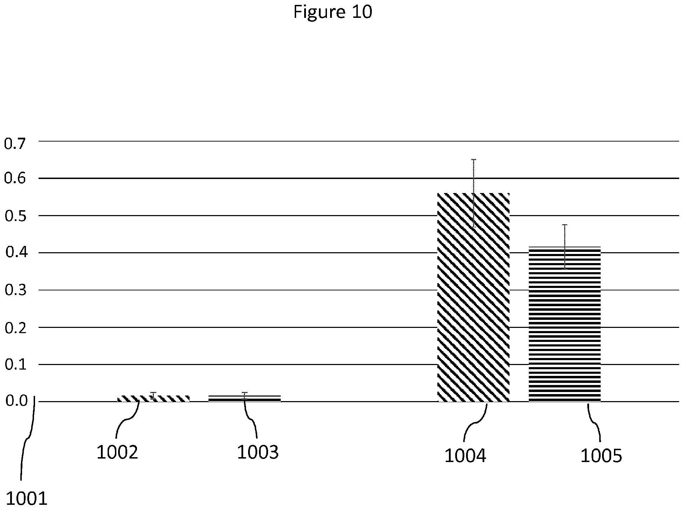

The coefficient of dry sliding friction of vials of the example 1 and comparative example 4 has been determined on the exterior surfaces of the vials in their tubular body regions after washing as well as after depyrogenisation. The results are shown in figure 10. It is demonstrated that the functionalisation of example 1 withstands the washing and depyrogenisation procedures.

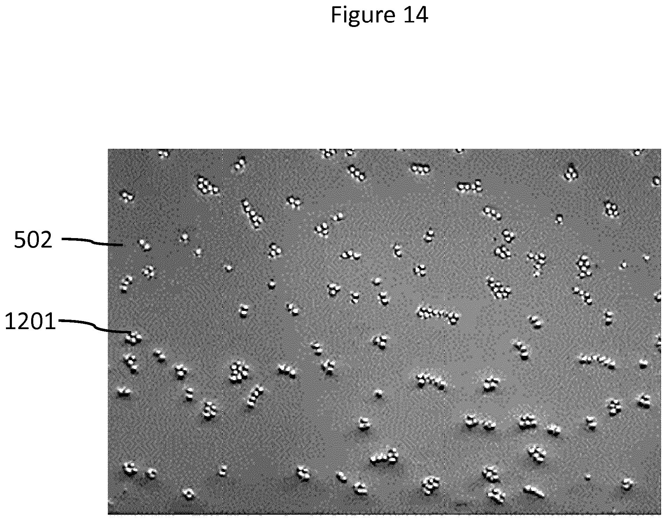

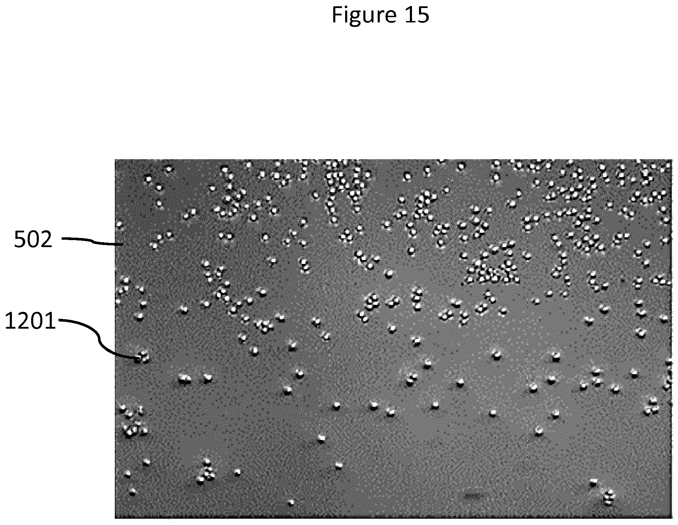

Further, vials of the example 2 have been studied for damages and defects caused by freeze drying under an optical microscope at a magnification of 5 to 20 times. It has been observed that no defects or damages have been caused by the freeze drying procedure. Figure 14 shows the exterior surface of a vial of example 2 prior to freeze drying and figure 15 after freeze drying. No damages or defects are to bee seen.

Unless otherwise specified in the description or the particular figure:
- Figure 1: shows a schematic depiction of a container precursor according to the invention;
- Figure 2: shows a schematic depiction of an arrangement according to the invention;
- Figure 3: shows a schematic depiction of another arrangement according to the invention;
- Figure 4: shows a flow chart of a process according to the invention for preparing a functionalised container precursor;
- Figure 5: shows a schematic depiction of a container according to the invention;
- Figure 6: shows a flow chart of a process for preparing a functionalised container;
- Figure 7: shows a schematic depiction of a closed container according to the invention;
- Figure 8: shows a flow chart of a process according to the invention for packaging a pharmaceutical composition;
- Figure 9: shows a flow chart of a process according to the invention for treating a patient;
- Figure 10: shows a diagram with results of measurements of the coefficient of dry sliding friction of vials of example 1 and comparative example 4;
- Figure 11: shows results of measurements of the transmission coefficient of vials according to the examples 1 to 5 and the comparative example 4;
- Figure 12: shows a microscope image of the exterior surface of a functionalised container precursor according to example 1;
- Figure 13: shows a further microscope image of the exterior surface of the functionalised container precursor according to example 1;
- Figure 14: shows a microscope image of the exterior surface of a vial according to example 2 prior to freeze drying; and
- Figure 15: shows a microscope image of the exterior surface of the vial of figure 14 after freeze drying.

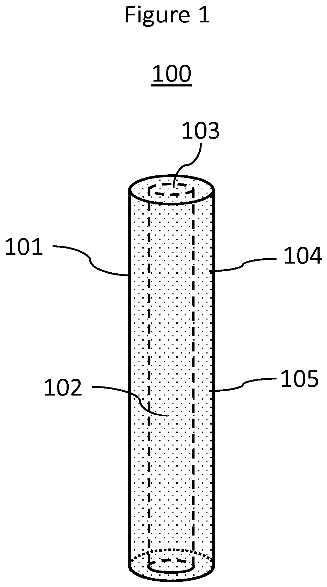

Figure 1 shows a schematic depiction of a container precursor 100 according to the invention. The container precursor 100 comprises a wall of glass 101 which fully encloses an interior volume 102 of the container precursor 100. The wall of glass 101 forms a hollow glass body 104. The hollow glass body 104 consists of a tube, which is a right circular cylinder, and two end face parts 103 which each seal an end face of the tube. On a side of the wall of glass 101 which faces away from the interior volume 102, a plurality of particles 1201 adjoins the wall of glass 101 across its full surface area. Further, the hollow glass body 104 has a precursor exterior surface 105 which faces away from the interior volume 102 and which is formed from the wall of glass 101 and the plurality of particles 1201. The precursor exterior surface 105 is characterised by a coefficient of dry sliding friction of 0.01 and a contact angle for wetting with water of 30°, in each case across its full surface area. The container precursor 100 of figure 1 is a precursor which has been obtained in accordance with example 1 according to the invention as explained above. Accordingly, the particles 1201 are SiO₂-particles which have been obtained from the polysilsesquioxane-particles which have been applied to the wall of glass 101.

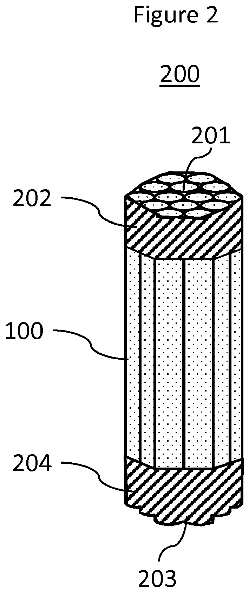

Figure 2 shows a schematic depiction of an arrangement 200 according to the invention. The arrangement 200 comprises a packaging and a multitude of container precursors 100 of figure 1. The multitude of container precursors 100 is packaged in the packaging. Here, the container precursors 100 form a bundle of hexagonally packed container precursors 100. The bundle comprises a first longitudinal end 201, which is wrapped in a first envelope 202, and a further longitudinal end 203, which is wrapped in a further envelope 204. The first 202 and further envelopes 204 form the packaging. Further the first 202 and further envelopes 204 are shrink foils. In the arrangement 200 of figure 2, the container precursors 100 are packed in contact with one another. The shrink foils prevent the container precursors 100 from moving relative to each other and thus, from scratching against each other.

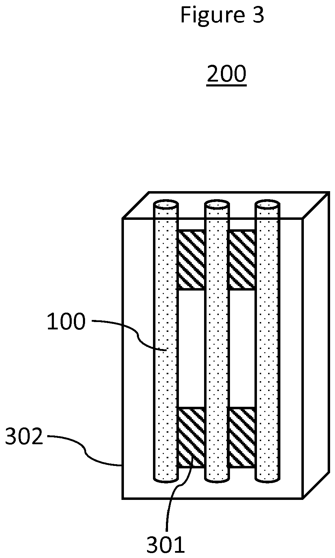

Figure 3 shows a schematic depiction of another arrangement 200 according to the invention. The arrangement 200 comprises a packaging and a multitude of container precursors 100 of figure 1. The multitude of container precursors 100 is packaged in the packaging. Here, the packaging comprises multiple spacer elements 301 which are pieces of Styrofoam, formed to accommodate the container precursors 100, thereby spacing them from one another such that the walls of glass 101 do not touch, even under mechanical shocks and vibrations on a transport to a factory in which containers 500 are to be made from the container precursors 100. The packaging further comprises a case 302 which is a cardboard box. The multitude of container precursors 100 and the spacer elements 301 are disposed in the case 302.

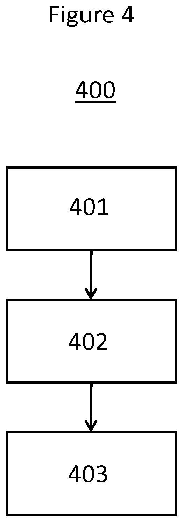

Figure 4 shows a flow chart of a process 400 according to the invention for preparing a functionalised container precursor 100. The process 400 comprises a process step a) 401 in which a closed glass tube of the type " Fiolax clear" from Schott AG is provided. A process step b) 402 of superimposing a wall of glass 104 of the glass tube with a composition is conducted as described above for example 1. Accordingly, the composition comprises isopropanol as vehicle and a plurality of polysilsesquioxane-particles as first plurality of particles. Also the step c) 403 of decreasing a proportion of the isopropanol in the composition is conducted as described in the context of example 1. Thereby, the functionalised container precursor 100 is obtained, in which SiO₂-particles as further plurality of particles are joined to the wall of glass 101 across its full exterior surface. The functionalised container precursor 100 is a container precursor 100 as shown in figure 1.

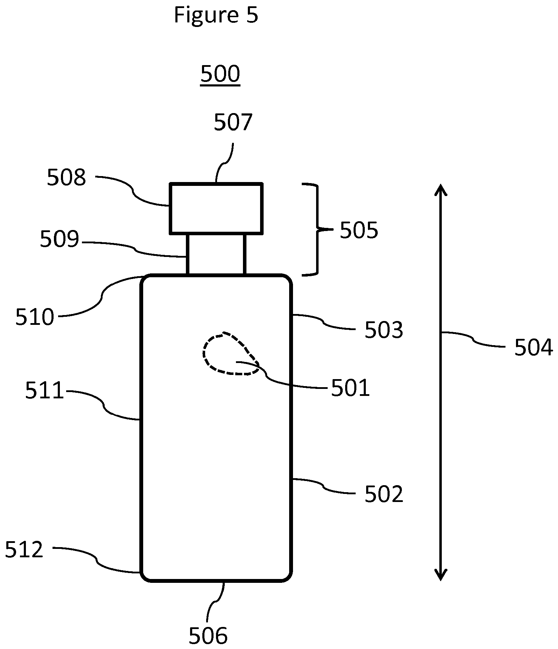

Figure 5 shows a schematic depiction of a container 500 according to the invention. The container 500 comprises a wall of glass 502 which forms a hollow glass body 503 which partially encloses an interior volume 501 of the container 500. The hollow glass body 503 encloses the interior volume 501 only partially in that the container 500 comprises an opening 507 which allows for filling the container 500 with a pharmaceutical composition 701 (not shown). The hollow glass body 503 comprises in a direction of a length 504 of the hollow glass body 503: a first end region 505, a body region 511, and a further end region 506. Here, the length 504 is a height 504 of the hollow glass body 502. Further, the first end region 505 is a top region 505 of the container 500. The top region 505 consists of a flange 508 and a neck 509. The body region 511 follows the top region 505, from top to bottom, via a shoulder 510. The further end region 506 is a bottom region 506, here a standing base of the container 500, which follows the body region 511 via a heel 512. The body region 511 of the container 500 is a part of the tube of the container precursor 100 of figure 1. Accordingly, in the body region 511, on a side of the wall of glass 502 which faces away from the interior volume 501, the wall of glass 502 adjoins a plurality of particles 1201 which is a part of the plurality of SiO₂-particles mentioned in the context of figure 1. The top region 505, the shoulder 510, the heel 512 and the bottom region 506 have been obtained from parts of the tube of the container precursor 100 of figure 1 by a hot forming method, in the course if which these parts have been heated to temperatures above 1,200 °C. Hence, the SiO₂-particles have been molten into the glass of the tube in that method. Thus, in the top region 505, the shoulder 510, the heel 512 and the bottom region 506, in each case on the side of the wall of glass 502 which faces away from the interior volume 501, the wall of glass 502 is not superimposed by any part of the plurality of particles 1201. Further, in the body region 511 a surface of the hollow glass body 503 which faces away from the interior volume 501 is characterised by a coefficient of dry sliding friction of 0.01. In the bottom region 506, a surface of the hollow glass body 503 which faces away from the interior volume 501 is characterised by a coefficient of static friction of 0.24. The container 500 of figure 5 is a vial which has been obtained in accordance with example 1 according to the invention as explained above.

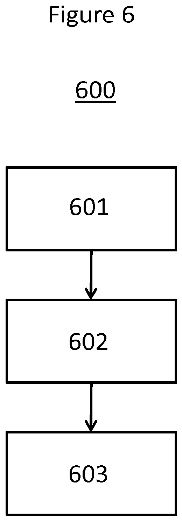

Figure 6 shows a flow chart of a process 600 for preparing a functionalised container 500. In a process step A) 601, the container precursor 100 of figure 1 is provided. The end face parts 103 are cut off the tube. Then, in a process step B), the remaining tubular part of the container precursor 100 is at least partially heated above a transformation temperature T_{g} of the glass of the wall of glass 101. In a process step C), the functionalised container 500 is formed from a part of the heated tube by hot forming. Therein, the part of the tube is reshaped only partially. In consequence, the functionalised container 500 comprises a tubular part which has already been present in the container precursor 100. The functionalised container 500 is identical to the container 500 of figure 5. Accordingly, the preceding tubular part forms the body region 511 of the functionalised container 500.

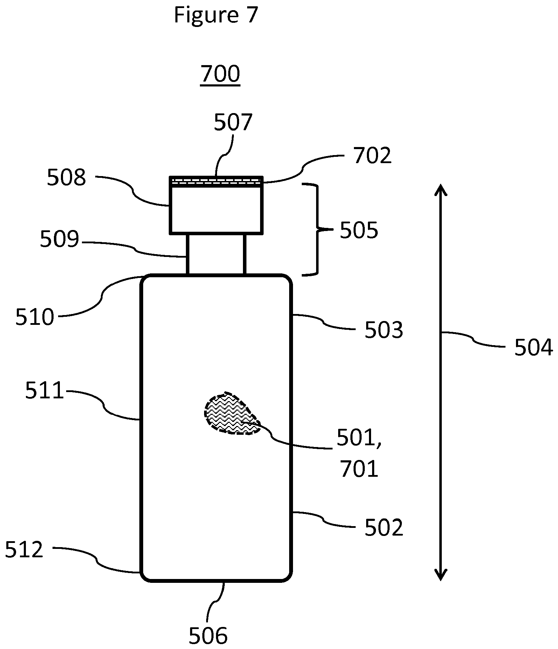

Figure 7 shows a schematic depiction of a closed container 700 according to the invention. This closed container 700 is a vial which has been obtained by filling the container 500 of figure 5 with a pharmaceutical composition 701 and closing the opening 507 with a lid 702 via a crimping step. Here, the pharmaceutical composition 701 is a vaccine.

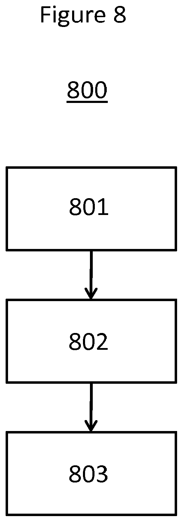

Figure 8 shows a flow chart of a process 800 according to the invention for packaging a pharmaceutical composition 701. In a process step a. 801, the container 500 according to figure 5 is provided. In a process step b. 802, a pharmaceutical composition 701 is filled into the interior volume 501 of the container 500, and in a process step b. 803 the opening 507 of the container 500 is closed, thereby obtaining the closed container 700 of figure 7.

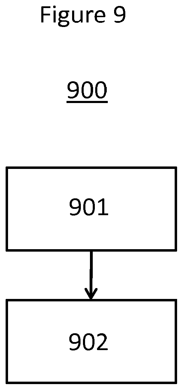

Figure 9 shows a flow chart of a process 900 according to the invention for treating a patient. This process 900 comprises the process steps of: A] 901 providing the closed container 700 of figure 7, opening the closed container 700 by penetrating the lid 702 with a needle of a syringe, filling the syringe with the vaccine; and B] 902 administering the vaccine subcutaneously to a patient using the syringe.

Figure 10 shows a diagram with results of measurements of the coefficient of dry sliding friction 1001 of the body regions 511 of vials of example 1 and comparative example 4. In the diagram, the bar 1002 shows measurement results for vials of example 1 after washing only, the bar 1003 shows measurement results for vials of example 1 after washing and subsequent depyrogenisation, the bar 1004 shows measurement results for vials of comparative example 4 after washing only, and the bar 1005 shows measurement results for vials of comparative example 4 after washing and subsequent depyrogenisation.

Figure 11 shows results of measurements of the transmission coefficient of vials according to the examples 1 to 5 and the comparative example 4 over the wavelength in nm 1101. In the diagram, 1103 denotes the measurement results for the examples 1 to 5 and comparative example 4. All these results are so close to each other that the corresponding graphs appear as one in the diagram. The dip at 865 nm is a measurement artefact.

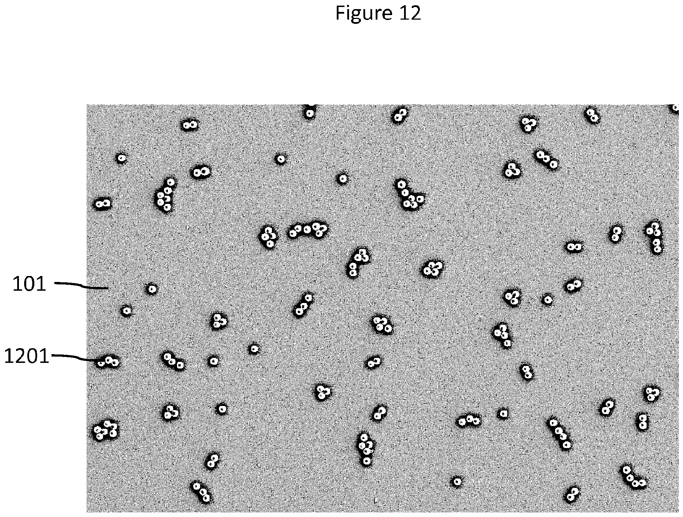

Figure 12 shows a microscope image of the exterior surface of a functionalised container precursor 100 according to example 1. The image has been obtained using the following parameters: acceleration voltage (EHT) = 5.99 kV, working distance (WD) = 6.9 mm, magnification = 1.00 k X. The plurality of particles 1201 can clearly be seen on the wall of glass 101.

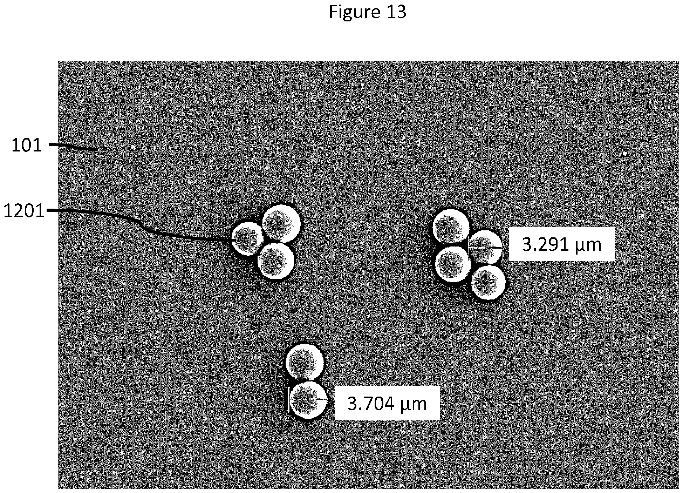

Figure 13 shows a further microscope image of the exterior surface of the functionalised container precursor 100 according to example 1. This image has been obtained using the following parameters: acceleration voltage (EHT) = 5.00 kV, working distance (WD) = 7.0 mm, magnification = 5.00 k X. The plurality of particles 1201 can clearly be seen on the wall of glass 101. The diameters of two exemplary particles 1201 are shown in the figure to be at 3.292 µm and 3.704 µm, respectively. These diameters are smaller than the average diameter of the Tospearls 145A from which the particles 1201 have been obtained. This is because during the heat treatment described in the context of example 2 SiO₂-particles have been formed from the Tospearls 145A, wherein the particles have shrunk.

Figure 14 shows a microscope image of the exterior surface of a vial according to example 2 prior to freeze drying. The plurality of particles 1201 can be seen on the wall of glass 502 of the vial.

Figure 15 shows a microscope image of the exterior surface of the vial of figure 14 after freeze drying. The plurality of particles 1201 can still be seen on the wall of glass 502. Further, no defects or damages from the freeze drying are visible.

### LIST OF REFERENCE NUMERALS

- **100**: container precursor / functionalised container precursor according to the invention
- **101**: wall of glass of the container precursor
- **102**: interior volume of the container precursor
- **103**: end face part
- **104**: hollow glass body of the container precursor
- **105**: precursor exterior surface
- **200**: arrangement according to the invention
- **201**: first longitudinal end
- **202**: first envelope
- **203**: further longitudinal end
- **204**: further envelope
- **301**: spacer element
- **302**: case
- **400**: process of the invention for preparing a functionalised container precursor
- **401**: process step a)
- **402**: process step b)
- **402**: process step c)
- **500**: container / functionalised container according to the invention
- **501**: interior volume of the container
- **502**: wall of glass of the container
- **503**: hollow glass body of the container
- **504**: length / height of the container
- **505**: first end region / top region
- **506**: further end region / bottom region
- **507**: opening
- **508**: flange
- **509**: neck
- **510**: shoulder
- **511**: body region
- **512**: heel
- **600**: process for preparing a functionalised container
- **601**: process step A)
- **602**: process step B)
- **603**: process step C)
- **700**: closed container according to the invention
- **701**: pharmaceutical composition
- **702**: lid
- **800**: process according to the invention for packaging a pharmaceutical composition
- **801**: process step a.
- **802**: process step b.
- **803**: process step c.
- **900**: process according to the invention for treating a patient
- **901**: process step A]
- **902**: process step B]
- **1001**: coefficient of dry sliding friction
- **1002**: measurement results for example 1 after washing the vials
- **1003**: measurement results for example 1 after depyrogenising the vials
- **1004**: measurement results for comparative example 4 after washing the vials
- **1005**: measurement results for comparative example 4 after depyrogenising the vials
- **1101**: wavelength in nm
- **1102**: transmission coefficient
- **1103**: measurement results for examples 1 to 5 and comparative example 4
- **1201**: particle of the plurality of particles

## Claims

1. A container precursor (100), comprising a wall of glass (101) which at least partially encloses an interior volume (102) of the container precursor (100);
wherein, on a side of the wall of glass (101) which faces away from the interior volume (102), the wall of glass (101) is at least partially superimposed by a plurality of particles (1201);
wherein the container precursor (100) is a precursor of a packaging container for a medical or a pharmaceutical packaging good or both.

2. The container precursor (100) according to claim 1, wherein the wall of glass (101) forms a hollow glass body (104) which at least partially encloses an interior volume (102) of the container precursor (100);
wherein the hollow glass body (104) has a precursor exterior surface (105) which faces away from the interior volume (102);
wherein the precursor exterior surface (105) is at least partially **characterised by** a coefficient of dry sliding friction of less than 0.25;
wherein the coefficient of dry sliding friction is determined using an identical friction partner and by sliding same surfaces against each other by moving the container precursor (100) forwards underneath the friction partner at a velocity of 10 mm/min and a constant normal force of 0.5 N over a test length of 15 mm,
wherein during the sliding the friction partner and the container precursor (100) incline an angle of 90° in a top view.

3. An arrangement (200), comprising
a) a packaging, and
b) a multitude of container precursors (100), packaged in the packaging,
wherein the container precursors (100) of the multitude of container precursors (100) are designed according to claim 1 or 2.

4. A process (400) for preparing a functionalised container precursor (100), the process (400) comprising as process steps
a) provision of a container precursor, comprising a wall of glass (101) which at least partially encloses an interior volume (102) of the container precursor;
b) superimposing at least a part of the wall of glass (101) on a side of the wall of glass (101) which faces away from the interior volume (102) with a composition, comprising
i) a first plurality of particles, and
ii) a vehicle;
and
c) decreasing a proportion of the vehicle in the composition, thereby leaving at least a part of
i) the first plurality of particles, or
ii) a further plurality of particles, which is obtained in the process step c) from at least a part of the first plurality of particles, or
iii) a combination of the first and the further plurality of particles
superimposed on the wall of glass (101),
wherein in the process step a) the container precursor is a precursor of a packaging container for a medical or a pharmaceutical packaging good or both.

5. A use of the container precursor (100) according to claim 1 or 2 for making a packaging container for a medical or a pharmaceutical packaging good.

## Patentansprüche

1. Ein Behältervorläufer (100), umfassend eine Glaswand (101), die zumindest teilweise ein Innenvolumen (102) des Behältervorläufers (100) umschließt;
wobei auf einer dem Innenvolumen (102) abgewandten Seite der Glaswand (101) die Glaswand (101) zumindest teilweise von einer Vielzahl von Partikeln (1201) überlagert ist;
wobei der Behältervorläufer (100) ein Vorläufer eines Verpackungsbehälters für ein medizinisches oder ein pharmazeutisches Verpackungsgut oder beides ist.

2. Der Behältervorläufer (100) nach Anspruch 1, wobei die Glaswand (101) einen Glashohlkörper (104) bildet, der ein Innenvolumen (102) des Behältervorläufers (100) zumindest teilweise umschließt;
wobei der hohle Glaskörper (104) eine Vorläufer-Außenfläche (105) aufweist, die dem Innenvolumen (102) abgewandt ist;
wobei die äußere Oberfläche (105) des Vorläufers zumindest teilweise durch einen Trockenreibungskoeffizienten von weniger als 0,25 gekennzeichnet ist;
wobei der Koeffizient der trockenen Gleitreibung unter Verwendung eines identischen Reibpartners und durch Gleiten gleicher Oberflächen gegeneinander bestimmt wird, indem der Behältervorläufer (100) unter dem Reibpartner mit einer Geschwindigkeit von 10 mm/min und einer konstanten Normalkraft von 0,5 N über eine Testlänge von 15 mm vorwärts bewegt wird,
wobei beim Gleiten der Reibpartner und der Behältervorläufer (100) in der Draufsicht einen Winkel von 90° einnehmen.

3. Eine Anordnung (200), umfassend
a) eine Verpackung, und
b) eine Vielzahl von Behältervorläufern (100), die in der Verpackung verpackt sind,
wobei die Behältervorläufer (100) der Vielzahl von Behältervorläufern (100) nach Anspruch 1 oder 2 ausgebildet sind.

4. Ein Verfahren (400) zur Herstellung eines funktionalisierten Behältervorläufers (100), wobei das Verfahren (400) als Verfahrensschritte umfasst
a) Bereitstellen eines Behältervorläufers, der eine Glaswand (101) umfasst, die ein Innenvolumen (102) des Behältervorläufers zumindest teilweise umschließt;
b) Überlagern mindestens eines Teils der Glaswand (101) auf einer dem Innenraum (102) abgewandten Seite der Glaswand (101) mit einer Zusammensetzung, umfassend
i) eine erste Vielzahl von Partikeln und
ii) ein Fahrzeug;
und
c) Verringern des Anteils des Vehikels in der Zusammensetzung, so dass zumindest ein Teil der
i) die erste Vielzahl von Partikeln, oder
ii) eine weitere Vielzahl von Partikeln, die im Verfahrensschritt c) aus mindestens einem Teil der ersten Vielzahl von Partikeln gewonnen wird, oder
iii) eine Kombination aus der ersten und der weiteren Vielzahl von Partikeln
die auf der Glaswand (101) aufliegt,
wobei im Verfahrensschritt a) der Behältervorläufer ein Vorläufer eines Verpackungsbehälters für ein medizinisches oder ein pharmazeutisches Verpackungsgut oder beides ist.

5. Eine Verwendung des Behältervorläufers (100) nach Anspruch 1 oder 2 zur Herstellung eines Verpackungsbehälters für ein medizinisches oder pharmazeutisches Verpackungsgut.

## Revendications

1. Un précurseur de récipient (100), comprenant une paroi de verre (101) qui entoure au moins partiellement un volume intérieur (102) du précurseur de récipient (100) ;
dans lequel, sur un côté de la paroi de verre (101) qui fait face à l'opposé du volume intérieur (102), la paroi de verre (101) est au moins partiellement superposée par une pluralité de particules (1201) ;
dans lequel le précurseur de récipient (100) est un précurseur de récipient d'emballage pour un produit d'emballage médical ou pharmaceutique, ou les deux.

2. Le précurseur de récipient (100) selon la revendication 1, dans lequel la paroi de verre (101) forme un corps de verre creux (104) qui renferme au moins partiellement un volume intérieur (102) du précurseur de récipient (100) ;
dans lequel le corps de verre creux (104) a une surface extérieure précurseur (105) qui fait face à l'opposé du volume intérieur (102) ;
dans lequel la surface extérieure précurseur (105) est au moins partiellement **caractérisée par** un coefficient de frottement de glissement à sec inférieur à 0,25 ;
le coefficient de frottement par glissement à sec est déterminé en utilisant un partenaire de frottement identique et en faisant glisser les mêmes surfaces l'une contre l'autre en déplaçant le précurseur de récipient (100) vers l'avant sous le partenaire de frottement à une vitesse de 10 mm/min et à une force normale constante de 0,5 N sur une longueur d'essai de 15 mm,
où, pendant le glissement, le partenaire de frottement et le précurseur de récipient (100) s'inclinent d'un angle de 90° dans une vue de dessus.

3. Un dispositif (200) comprenant
a) un emballage, et
b) une multitude de précurseurs de conteneurs (100), conditionnés dans l'emballage,
dans lequel les précurseurs de récipients (100) de la multitude de précurseurs de récipients (100) sont conçus selon la revendication 1 ou 2.

4. Un procédé (400) de préparation d'un précurseur de récipient fonctionnalisé (100), le procédé (400) comprenant les étapes suivantes
a) fournir d'un précurseur de récipient, comprenant une paroi de verre (101) qui entoure au moins partiellement un volume intérieur (102) du précurseur de récipient
b) superposer au moins une partie de la paroi de verre (101) sur un côté de la paroi de verre (101) qui est tourné vers l'extérieur du volume intérieur (102) avec une composition, comprenant
i) une première pluralité de particules, et
ii) un véhicule ;
et
c) diminuer la proportion de véhicule dans la composition, en laissant au moins une partie de la composition dans le véhicule, en laissant au moins une partie de la composition dans le véhicule.
i) la première pluralité de particules, ou
ii) une autre pluralité de particules, obtenue à l'étape c) du processus à partir d'au moins une partie de la première pluralité de particules, ou
iii) une combinaison de la première et de la deuxième pluralité de particules superposé au mur de verre (101),
dans lequel, à l'étape a) du processus, le précurseur de récipient est un précurseur de récipient d'emballage pour un produit d'emballage médical ou pharmaceutique, ou les deux.

5. Une utilisation du précurseur de récipient (100) selon la revendication 1 ou 2 pour la fabrication d'un récipient d'emballage pour un produit d'emballage médical ou pharmaceutique.
